# EUROPEAN PATENT APPLICATION

(11) **EP 1 092 399 A2**
(43) Date of publication of application: **18.04.2001**
(21) Application number: 00122131.6
(22) Date of filing: 12.10.2000
(51) Int. Cl.: A61C 17/26

(54) **Electric toothbrush with reversible rotating spherical-cylindrical cleaning surfaces**

(30) Priority: 14.10.1999 IT BG990046
(71) Applicant: Bagattini, Gianluca, 24128 Bergamo (IT)
(72) Inventor: Bagattini, Gianluca, 24128 Bergamo (IT)
(74) Representative: Luksch, Giorgio, Dr.-Ing.

(57) **Abstract**

This electrical toothbrush has the particular feature of working by means of a reversible rotating spherical-cylindrical cleaning surface, with the reversibility causing the cleaning surface to run from the gum to the top of the tooth so as to avoid food residues sticking between the gum and the neck of the tooth.

The cleaning surface is preferably made from bristles of a spherical-cylindrical shape and removable in order to be substituted by similar brushes fitted with bristles and of a shape suitable for the cleaning function.

## Description

This invention refers to an electric toothbrush with reversible rotating spherical-cylindrical cleaning surfaces. As is known, in this modern society teeth play a very important role. The beauty and elegance of a person can be reduced to all but nothing if that person, on opening their mouth to speak or to smile, were to show dark, irregular or even missing teeth. Similarly, in close contact between people their breath is of basic importance: any one that has bad breath is distanced psychologically from the social group. In this context, oral hygiene plays a determinant role, and specifically the cleaning of the teeth. It has been demonstrated clinically that the teeth that are not systematically and carefully cleaned are subject to yellowing and to irregular darkening. They are also subject to becoming the base for bacterial plaque, the base for the formation of calcium deposits known as tartar, and the site of caries that progressively destroy the whole dental structure. The absence of the cleaning of teeth also causes the putrefaction of the food residues blocked between the teeth. This is well known to be the source of bad breath, and the need to avoid it is easy to understand. From the foregoing there is a clear need to provide for the cleaning of the teeth that is both efficacious and as complete as possible. It is universally known that, as from the 1930s, various tooth brushing techniques have been proposed using manual toothbrushes, with the objective of obtaining the removal of bacterial plaque that is responsible for the formation of caries and periodontal disease. The technique that found the greatest success was that defined by Bass (recently illustrated in the magazine *Prevenzione e assistenza dentale, Masson,* 1/99), that provided for a rotary 'roller' movement in the gum to tooth direction. Among the instruments used to this end at this time there are only the traditional manual toothbrushes. The manual toothbrushes are however tiring to use, especially manipulated in the correct, vertical way as established in the cited Bass technique. It follows that the cleaning obtained by the use of the manual toothbrush is generally incomplete. In an attempt to overcome this limitation, a motorised toothbrush has been conceived which, taking its cleaning motion from the force and prolonged action of its electrical motor, may be particularly convenient to use. It has, however, been found to be impractical because of the 'level' of the bristles that rotate around a perpendicular axis to the teeth. With this action, obtained substantially by a 'cupped' brush, the rotation imposed on the bristles makes them move continuously both in the direction that jams the dirt, removed from the teeth, into the space that exists between the teeth and the gums, and in the opposite direction. As the brush has a flat working surface, it is difficult for its bristles to penetrate the vertical spaces between the teeth. This action is proportional to the rotation speed of the said cupped brush. Conceptually it follows that there is either a rapid but poor cleaning by means of a high rotation speed, or there is good cleaning that has, however, to take time. The configuration of the cup, in addition, is subject to insuperable conceptual limitations in its operational diameter. The greater the diameter, the greater the centrifugal force acting on the bristles, and this in turn imposes an oblique orientation or a flattening of the bristles themselves, rather than the orientation parallel to the axis of rotation. Nor is it possible to make the bristles less flexible as this would make them too abrasive, and their heads would consequently damage the gums. The scope of this invention is to define a toothbrush that has cleaning movements derived from an electric motor where such cleaning movements have directions suitable for the ideal removal of the particles present on the teeth. Another scope is that of defining a toothbrush, as above, that presents a large working surface in order to make the operation rapid. Another scope is to define a rotating toothbrush that has its bristles positioned radially to increase their in-line rigidity thanks to the centrifugal force, so as to use softer bristles. These and other scopes have been achieved as is shown from the reading of the following detailed description that illustrates an electrical toothbrush with a particular feature of operating by means of a spherical-cylindrical cleaning surface that rotates in changeable directions, known as reversibility, by causing the cleaning surface to run always from the gum to the top of the teeth so as to avoid that the cleaning surfaces jam the food residues between the gum and the base of the teeth.

The cleaning surface is preferably undertaken of bristles that make a spherical-cylindrical shaped brush that may be substituted by similar devises and with bristles and shape that is suitable for these specific cleaning functions.

The invention is illustrated, purely for illustrative purposes, but in no sense limiting the invention, in the following drawings in which:
- fig. 1 shows, with a lateral view in which the right cheek has been removed, the outer surface of the right teeth associated with a rotating toothbrush used to clean the upper arc of the teeth;
- fig. 2, like fig. 1, shows the outer surface of the right teeth associated with a rotating toothbrush used to clean the lower arc of the teeth;
- figs, 3, 4, 5, 6, 7, 8, 9, and 10 show, with a schematic front view, an oral cavity sectioned transversally and the direction in which a toothbrush rotates against the various dental surfaces to be cleaned;
- fig. 11 shows a schematic section of the complete body of an electrical toothbrush;
- fig. 12 shows a schematic section of a version of a toothbrush, as above, fitted with a hydrodrive.

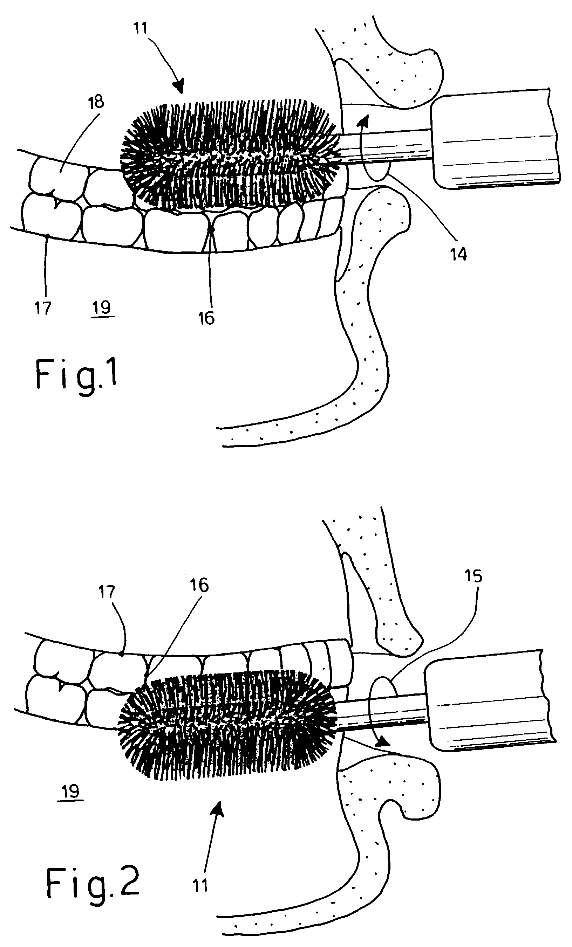

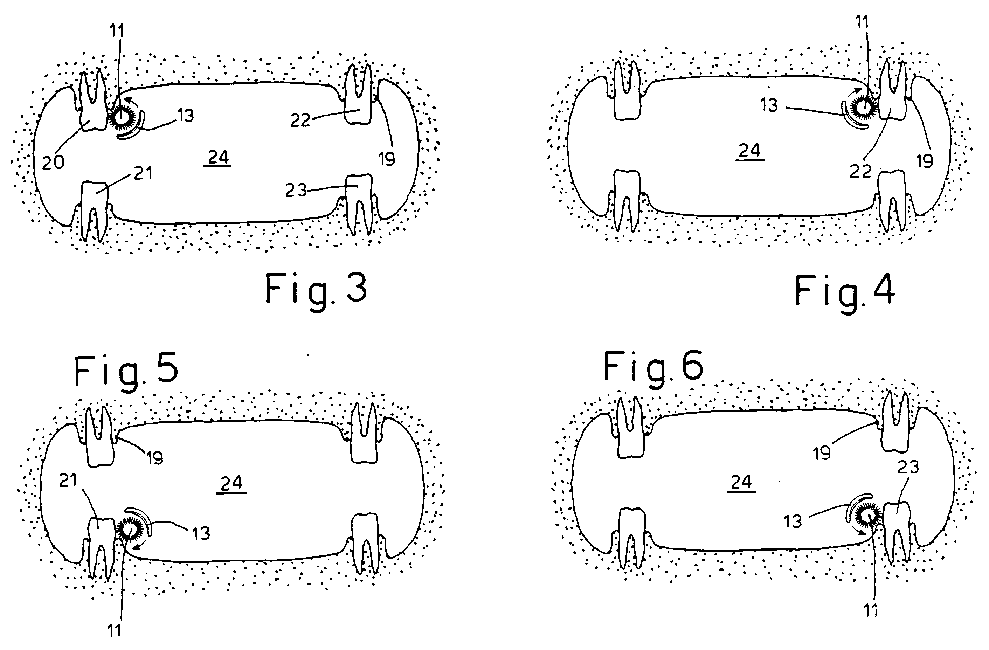

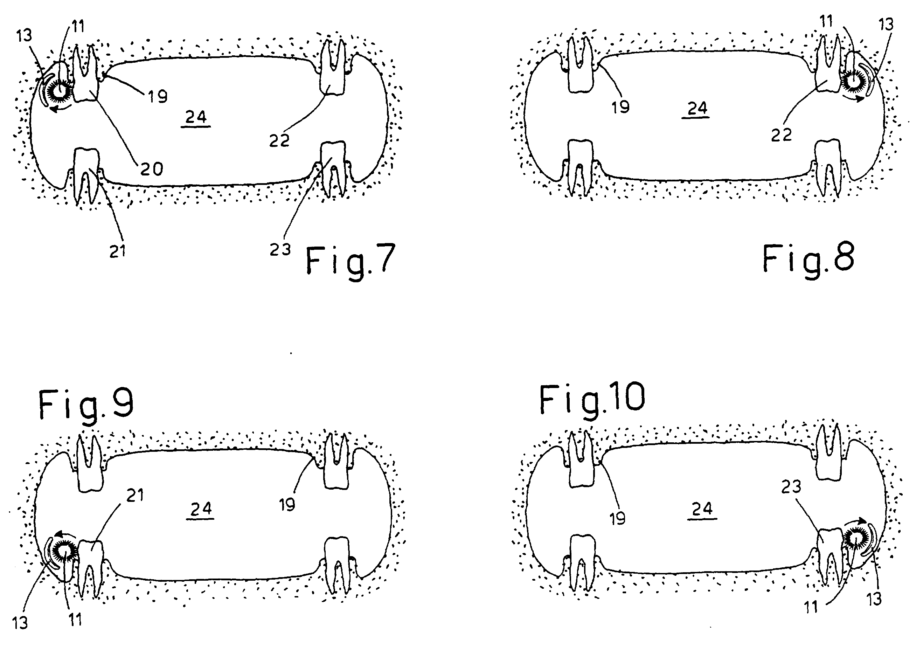

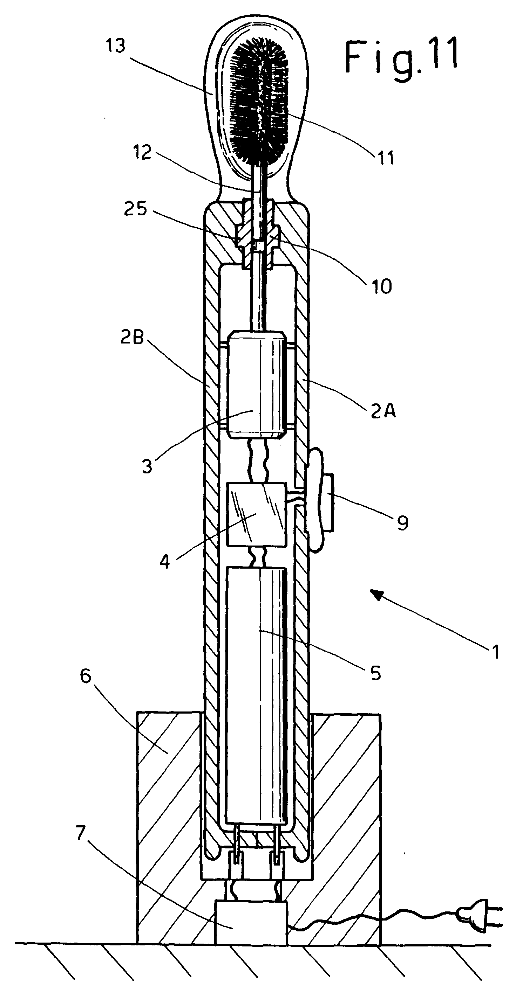

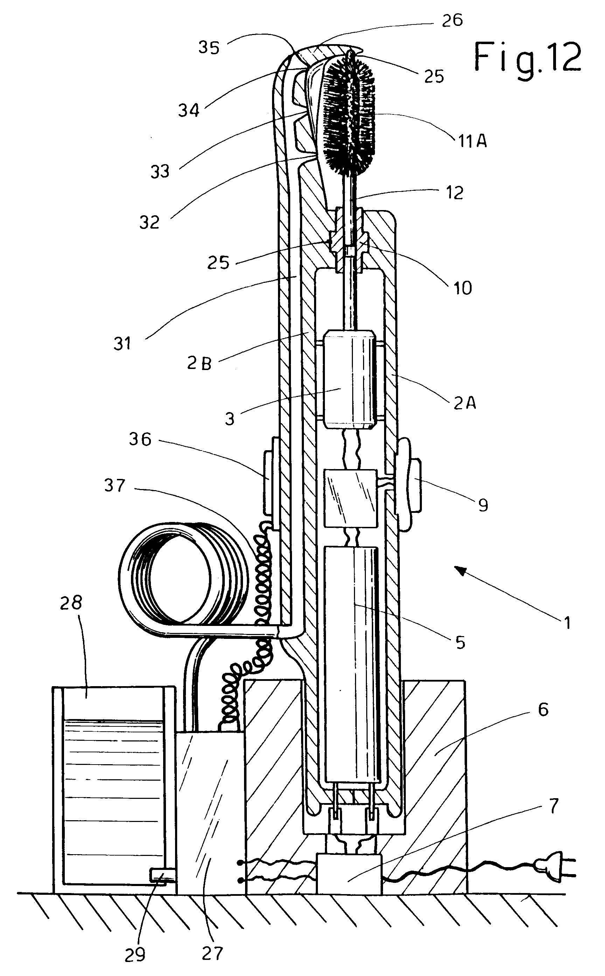

With reference to the cited fig. 11, a handle 1 is fitted with a substantially tubular structure formed by two half-shells 2A and 2B to allow, as with the usual technique, the insertion of various working parts within the tubular structure. These parts are, substantially, a small DC electrical motor 3; a control button 9; a switching device 4 for the direction of rotation of the motor 3 and an electrical battery 5, preferably of the rechargeable type. Other construction parts are a rotating support 10; this support is axially linked to the half-shell structure 2A, 2B, with anti-friction ring devices 25, having the function of supporting the axial and radial operational forces to which the associated rotating toothbrush is subject. This support 25 is force-fitted by friction to the shaft of the electrical motor 3. The fundamental operational organ of the invention is a rotating toothbrush 11 fitted with a removable shaft 12 driven by the rotating shaft 10. The removable nature of the said brush is required in order to make available a range of rotating toothbrushes with a variety of properties that permit them to be specifically suited to the various types of mouths, that may be larger or smaller, and more or less sensitive to the rubbing of the bristles. The rotating toothbrush 11 has one part covered by a cheek guard 13, with the function of protecting also the tongue, and consisting of a semi-cylindrical wall without sharp edges or corners that has to be moved within the oral cavity without creating problems for the user. Optionally, the toothbrush may be fitted with a support 6 with devices 7 for the transformation and rectification of the mains electrical current drawn from the usual plug 8. With reference to figures 1, 2, 3, 4, 5, 6, 7, 8, 9, and 10 the need to change the direction of rotation (shown by a curved arrow) of the rotating toothbrush 11 in relation to the part of the tooth being cleaned can be understood. Similarly, the direction of rotation 14 can be seen for the cleaning of the right external upper arc; similarly, the direction of rotation 15 can be seen for the cleaning of the right external lower arc. Figures 1 and 2 make clear how the cited directions of rotation allow the bristles of the rotating toothbrush 11 to be introduced into the vertical cavities 16 between the teeth, as well as between the horizontal spaces 17 between the teeth 18 and the gums 19. By so acting, they can move in a direction that allows them to rub against the teeth and through the particles removed away from the teeth themselves. The removed particles obviously flow into the oral cavity 24 where they are diluted by, and expelled in the saliva, or rinsing water. The complete cleaning of all the teeth, both internally and externally, requires a number of changes in the direction of the rotation of the toothbrush 11, but these are intuitive and easy to make as they occur by simply pressing the thumb on the special control button 9. This button is preferably provided with three positions +, 0 and -, that is to say rotation to the right, stop to the rotation and rotation to the left. The movement of this switch 9 is preferably on the circumference to the cylindrical form of the half-shells of the handle 2A, 2B. In this way the movement is even more instinctive. With reference to Figs. 3, 4, 5, 6, 7, 8, 9 and 10 with 20, an upper tooth is shown in the right-hand zone of the arc, with 21 showing a lower right tooth; with 22 showing an upper tooth sited on the left of the arc; with 23 showing its corresponding tooth present in the lower zone of the cited oral cavity 24. The spherical shape of the extremity of the toothbrush is intended to act efficaciously also in the central internal zone of the two dental arcs. With reference to Fig. 12, it can be seen how, from the implementation, in certain conditions the performance of the toothbrush may be improved. Among these there can be seen a toothbrush 11A fitted with a covering extension 25 with a seating in the body of a special cheek guard 26. This has the scope of supporting the rotating toothbrush 11A at both ends in order to give greater stability to its rotation. The insertion of the extension 25 into its seating, present on the cheek guard 26, is to be obtained by exploiting the suitable elasticity of the extremity of the cheek guard 26. Another implementation illustrated by 12 is a hydrodrive device that may operate independently and together with the abrasive action of the surface of the bristles (or their equivalent) of the rotating toothbrush 11A. This device includes a small hydraulic pump 27 that draws water and or mouthwash and/or disinfectant from the tank 28 by means of its input 29. The said small pump has a spiral feed tube 30 which allows it to be extended in use. The said feed tube then joins with an internal tube 31 that has an outlet in the small holes 32, 33, 34, and 35 which spray the liquid inside the mouth.

These small holes may direct their jet or spray both directly into the rotating toothbrush 11A (as illustrated for example by holes 32, 33 and 34) or directly into the mouth or onto the teeth (as by hole 35).

These holes obviously may be positioned in other zones or in another number according to the specific design choices made.

The availability of these liquids permits, with advantage, a particularly energetic action as they allow not only a lubricant effect on the bristles but also a cooling effect on the zone subject to rubbing.

The activation of this hyrodrive is by means of switch 36 which is of the usual electrical switch design; the electrical wires 37 are drawn purely schematically to indicate their relationship to the small electrical pump 27.

## Claims

1. An electric toothbrush characterised by the fact that it operates by means of a spherical-cylindrical cleaning surface with reversible directions of rotation called reversibility, which always runs in a direction in relation to the surface to be cleaned, that is from the gum to the top of the teeth in order to avoid that the cleaning surfaces jam the space between the gum and the base of the tooth with the particles removed, or food residues.

2. An electric toothbrush, as in the previous claim, characterised by the fact that the cleaning surface is preferably made using radial bristles forming a cylindrical toothbrush.

3. An electric toothbrush, as in the previous claims, characterised by the fact of being removable for its substitution of other similar toothbrushes fitted with bristles and having shapes suited to the specific cleaning functions of oral cavities of different sizes and sensitivities.

4. An electric toothbrush, as in the previous claims, characterised by a rotating support (10) linked axially to a base structure (2A, 2B) and designed to receive also the radial forces acting on the rotating brush (11) avoiding their transmission to the bushes intrinsic of an electrical motor (3).

5. An electric toothbrush, as in the previous claims, characterised by a rotating element (11) covered by its semi-cylindrical part by a suitably shaped wall (13) intended to protect the cheek and/or tongue.

6. An electric toothbrush, as in the previous claims, characterised by the removable nature of the toothbrush (11) held by a force-fit by friction of its shaft inside the rotating support, this support being axially linked to the half-shell structure (2) by means of ring devices (25), the said support having the function of an anti-friction bush, it being driven by the shaft of the electrical motor (3) with a similar means of force-fitting.

7. An electric toothbrush, as in the previous claims, characterised by the fact of being associated with a hydrodrive providing the spray of water and/or mouthwash and/or disinfectant for the better cleaning action of the rotating surfaces of a toothbrush.

8. An electric toothbrush, as in the previous claims, characterised by the fact that the jet of liquid (32, 33 and 34) are directed onto the rotating brush (11A).

9. An electric toothbrush, as in the previous claims, characterised by the fact that the jets of liquid are directed so as not to hit the rotating brush.

10. An electric toothbrush, as in the previous claims, characterised by the fact that the liquid tank and the spray pump are integrated into the same support base (6) including the means for the transformation and regulation of the electrical current required for the charging of the battery (5) and the powering of the small pump (27).
